# EUROPÄISCHE PATENTSCHRIFT

(11) **EP 0 866 755 B1**
(45) Veröffentlichungstag und Bekanntmachung des Hinweises auf die Patenterteilung: **06.08.2003**
(21) Anmeldenummer: 96942352.4
(22) Anmeldetag: 05.12.1996
(51) Int. Cl.: B60R 21/32

(54) **AIRBAGSYSTEM MIT VARIABLEM AUSLÖSEZEITPUNKT**
AIRBAG SYSTEM WITH VARIABLE TRIGGERING POINT
SYSTEME D'AIRBAG A TEMPS DE DECLENCHEMENT VARIABLE

(30) Priorität: 12.12.1995 DE 19546297
(43) Veröffentlichungstag der Anmeldung: 30.09.1998
(73) Patentinhaber: TRW Airbag Systems GmbH, 84544 Aschau am Inn (DE)
(72) Erfinder: BAUER, Hermann, D-89518 Heidenheim (DE); BENDER, Richard, D-91207 Lauf (DE); FÜRST, Franz, D-85098 Grossmehring (DE)
(74) Vertreter: Degwert, Hartmut, Dipl.-Phys.
(86) Internationale Anmeldenummer: EP9605430
(87) Internationale Veröffentlichungsnummer: WO97021566

(56) Entgegenhaltungen:
- EP-A- 0 473 324
- WO-A-94/22693
- WO-A-94/23973
- WO-A-95/11819
- DE-A- 4 112 579
- DE-A- 4 341 500
- US-A- 5 184 845
- US-A- 5 209 510
- US-A- 5 400 487
- US-A- 5 413 378

## Beschreibung

Die Erfindung betrifft ein Verfahren und ein Airbagsystem zum Abbau der kinetischen Energie eines Fahrzeuginsassen bei einem Fahrzeugunfall mit starker, negativer Beschleunigung, wobei das Airbagsystem eine Steuereinheit zum Aurblasen eines Luftsackes aufweist, die das Airbagsystem aufgrund von elektrischen Signalen eines im Fahrzeug vorgesehenen Beschleunigungssensors aktiviert.

Ein derartiges Verfahren und ein Airbagsystem sind aus der EP 0 449 506 A1 bekannt.

Im Falle eines Fahrzeugcrashs erzeugen sogenannte Airbaggasgeneratoren Gas zum Füllen eines Luftsackes, der dann die Fahrzeuginsassen vor dem Aufprall auf harte Fahrzeuginnenteile wie das Lenkrad schützt. Physikalisch gesehen passiert dabei nichts anderes, als daß der durch den Fahrzeugcrash beschleunigte Insasse durch den relativ weichen Luftsack abgebremst bzw. aufgefangen wird. Dabei strömt Gasmasse durch sogenannte Entlüftungslöcher (Ventholes) aus dem Airbag. Demnach hat der Airbag die Aufgabe, die kinetische Energie des Insassen auf einem kurzen Weg möglichst "weich" abzubauen.

Heutige Airbagkonzepte verwenden meist Gasgeneratoren pyrotechnischer Art. Pyrotechnische Gasgeneratoren funktionieren im allgemeinen derart, daß durch einen Stromimpuls von der einen Fahrzeugcrash erkennenden Sensorik ein Anzünder im Gasgenerator gezündet wird. Diese Anzündung wird durch eine sogenannte Anzündladung, die heiße Partikel erzeugt, verstärkt. Diese heißen Partikel treffen dann auf die Oberfläche des meist in Tablettenform vorliegenden Treibstoffs, der dann selbst zündet und in der sogenannten Brennkammer unter einem hohen Druck abbrennt. Dadurch entsteht das Gas zum Füllen des Luftsackes. Da neben reinem Gas auch noch flüssige bzw. feste Bestandteile bei der Verbrennung entstehen, wird der Gasstrom durch entsprechende Filter in der Filterkammer vor Austritt aus dem Gasgenerator gereinigt.

Wichtig ist, daß es immer zu einem vollständigen Abbrand kommt und daher immer die gleiche Menge Gas erzeugt wird, wenn der Treibstoffabbrand einmal in Gang gesetzt worden ist. Desweiteren wird die Temperatur des erzeugten Gases im wesentlichen nur durch die bei Zündung des Gasgenerators herrschende Umgebungstemperatur beeinflußt. Dies bedeutet nichts anderes, als daß die Auffangwirkung des Airbagsystems im wesentlichen durch die Umgebungstemperatur beeinflußt wird.

Das aus der EP 0 449 506 A1 bekannte Airbagsystem weist eine zweistufige Aufblasvorrichtung zum Aufblasen des Luftsackes auf. Die zweistufige Ausbildung der Aufblasvorrichtung führt dazu, daß der Luftsack in einer ersten Stufe zunächst langsam teilweise aufgeblasen wird und in einer zweiten Stufe schnellstmöglich vollständig aufgeblasen wird. Zwischen der ersten Aufblasstufe und der zweiten Aufblasstufe ist eine zeitliche Verzögerung vorgesehen, die ein schonenderes Auftreffen des Fahrzeuginsassen auf den Airbag ermöglichen soll. Der bekannte Airbag wird aber trotzdem vollständig und mit großem Innendruck aufgeblasen, so daß eine Verletzung des vor dem Airbag sitzenden Fahrzeuginsassen durch den harten Aufprall auf den Luftsack nicht ausgeschlossen werden kann.

Bei dem Airbagsystem nach der Lehre der EP 0 455 435 A2 dringt das Gas zunächst langsam in den Luftsack ein und bläst anschließend mit maximaler Einströmgeschwindigkeit den Luftsack vollständig auf. Daher kann auch durch dieses zweistufig ausgebildete Airbagsystem keine Abstimmung des aufgeblasenen Luftsacks auf den vor dem Airbag sitzenden Fahrzeuginsassen erreicht werden. Aus diesem Grund können auch bei diesem Airbagsystem Verletzungen des vor dem Airbag sitzenden Fahrzeuginsassen, insbesondere bei Kindern, nicht gänzlich verhindert werden.

Aus der US-PS 5,219,178 ist ein weiteres Airbagsystem bekannt, bei dem das zum Aufblasen des Luftsackes zu erzeugende Gas in zwei verschiedenen Kammern nacheinander erzeugt wird. Dadurch läßt sich erreichen, daß gegenüber dem bisherigen Stand der Technik eine größere Gasmenge zum Aufblasen des Luftsackes erzeugt werden kann. Durch die zweistufige Aufblasvorrichtung wird der Luftsack aber dennoch immer vollständig mit dem gleichen Härtegrad aufgeblasen. Folglich kann auch dieses bekannte Airbagsystem einen kleineren und leichteren Fahrzeuginsassen, der vor dem Airbag sitzt, beispielsweise ein Kind, verletzen.

Aus der WO 95/11819 ist ein Airbagsystem bekannt, bei dem durch Sensoren erfaßt wird, wie groß die Beschleunigung des Fahrzeugs ist und ob der Fahrzeuginsasse einen Sicherheitsgurt trägt. Die Sensoren geben elektrische Signale, die diese Parameter repräsentieren, an eine mit der Steuereinheit verbundene Auswertelektronik weiter. Unmittelbar nach dem Erkennen eines Aufpralls wird die erste Stufe eines zweistufigen Gasgenerators gezündet. Anhand der erfaßten Parameter wird eine Zeit bis zu einer maximal erlaubten Vorverlagerung des Fahrzeuginsassen und abhängig hiervon eine Verzögerungszeit für die Aktivierung der zweiten Stufe des zweistufigen Gasgenerators bestimmt. Dieser Wert wird an die Steuereinheit weitergegeben, welche dann zu diesem Zeitpunkt die zweite Stufe des Gasgenerators auslöst. Der Aufblasvorgang des Luftsacks wird dadurch an den sich unterschiedlich schnell vorverlagernden Fahrzeuginsassen angepaßt, daß die Dauer des Aufblasvorgangs durch unterschiedliche Verzögerung der Zündung der zweiten Stufe des Gasgenerators verändert wird.

Aus der amerikanischen Patentschrift Nr. 5 413 378 ist ein Airbagsystem bekannt, bei dem Parameter wie die Stellung des Fahrzeugsitzes, das Gewicht des Fahrzeuginsassen und die Position des Fahrzeuginsassen erfaßt werden. Die erfaßten Parameter werden einer Auswerte- und Steuereinheit übergeben, die anhand der Sensoreingaben mit Hilfe einer Speichertabelle eine Steuerzone ermittelt. Ausgehend von Werten, die zu der ermittelten Steuerzone gehören, reguliert die Auswerte- und Steuereinheit dann über steuerbare Entlüftungsventile den Füllgrad eines Luftsacks und paßt diesen an die kinetische Energie eines auftreffenden Fahrzeuginsassen an.

In der Druckschrift WO 94/22693 ist ein System sowie ein Verfahren zum Abbau der kinetischen Energie eines Fahrzeuginsassen bei einem Fahrzeugunfall mit starker negativer Beschleunigung mittels Aufblasen eines Luftsackes in einem Airbagsystem gezeigt, wobei die Sitzposition des vor dem Airbag sitzenden Fahrzeuginsassen durch Sensorelemente erfaßt wird, sowie durch Sensorelemente erfaßt wird, ob der Sicherheitsgurt von dem vor dem Airbag sitzenden Fahrzeuginsassen angelegt ist, und wobei die Geschwindigkeit des Fahrzeuginsassen während der Vorverlagerung bei einem Aufprall bestimmt wird. Von den Sensorelementen werden Signale, die diese Parameter repräsentieren, an eine Auswerteelektronik übergeben. In der Auswerteelektronik kann beispielsweise aus diesen Werten berechnet werden, an welcher Position sich der Fahrzeuginsasse wahrscheinlich zum Zeitpunkt des Entfaltens des Luftsacks befinden wird. In Abhängigkeit davon wird eine Entfaltung eines Luftsacks entweder verhindert, wenn die Gefahr besteht, daß der Fahrzeuginsasse durch den sich entfaltenden Luftsack verletzt wird, oder der Zeitpunkt, zu welchem das Aufblasen des Luftsacks beginnen soll, sowie das Aufblasverhalten des Luftsacks kann verändert werden.

Aus der amerikanischen Patentschrift Nr. 5 184 845 ist ein Airbagsystem bekannt, bei dem die kinetische Energie eines Fahrzeuginsassen anhand der Fahrzeuggeschwindigkeit und des Signals eines Sicherheitsgurtsensors bestimmt wird. Ausgehend von der erhaltenen kinetischen Energie des Fahrzeuginsassen wird der Innendruck eines Airbags über Entlastungsventile so gesteuert, daß der Innendruck für ein schonendes Abfangen des Fahrzeuginsassen so niedrig wie möglich ist.

Durch die amerikanische Patentschrift 5 400 487 wird ein System zum Befüllen eines Luftsacks vorgeschlagen, das einen mehrstufigen Gasgenerator aufweist. Sensoren erfassen die Position des Fahrzeuginsassen und die Beschleunigung des Fahrzeugs beim Aufprall. In Abhängigkeit der Position des Fahrzeuginsassen und der Beschleunigung des Fahrzeugs wird der Beginn und die Zeitdauer des Aufblasvorganges des Gassacks durch Veränderung der Zündzeitpunkte der einzelnen Gasgeneratorstufen angepaßt.

Der vorliegenden Erfindung liegt die Aufgabe zugrunde, die bekannten Verfahren bzw. Airbagsysteme zum Abbau der kinetischen Energie eines Fahrzeuginsassen so weiterzubilden, daß das Aufblasverhalten des Luftsacks noch besser auf die Unfallsituation und den individuellen Fahrzeuginsassen abgestimmt werden kann und sichergestellt ist, daß der Luftsack beim Auftreffen des Fahrzeuginsassen vollständig aufgeblasen ist.

Diese Aufgabe wird durch ein Verfahren bzw. ein Airbagsystem mit den Merkmalen des Anspruchs 1 bzw. des Anspruchs 9 gelöst.

Durch die Sensorelemente läßt sich der vor dem Airbag sitzende Fahrzeuginsasse sehr gut charakterisieren, so daß ein optimaler Schutz des Fahrzeuginsassen dadurch gewährleistet ist, daß der Auslösezeitpunkt des Airbagsystems auf den vor dem Airbag sitzenden Fahrzeuginsassen und die aktuellen Umstände der Unfallsituation abgestimmt ist. Das Airbagsystem ist durch das erfindungsgemäße Verfahren derart steuerbar, daß stets die für den Fahrzeuginsassen notwendige weiche Auffangwirkung erzielt wird.

Die Erfassung der Sitzposition ist von besonderem Vorteil, da erfaßt werden kann, ob der Fahrzeuginsasse beispielsweise auf der Vorderkante des Fahrzeugsitzes oder vorgebeugt oder zurückgelehnt auf dem Fahrzeugsitz sitzt oder die Rückenlehne nach hinten umgeklappt hat. Die Erfassung dieser Parameter könnte beispielsweise durch im Sitzpolster angebrachte Druckfühler realisiert werden.

Durch die Erfassung, ob der Sicherheitsgurt von dem vor dem entsprechenden Airbag sitzenden Fahrzeuginsassen angelegt ist, kann die Steuereinheit den Luftsack derart aufblasen, daß die Sicherheit des Fahrzeuginsassen trotz nicht angelegten Sicherheitsgurtes durch den Airbag zumindest teilweise kompensiert und gewährleistet werden kann.

Ein weiterer wesentlicher Vorteil der erfindungsgemäßen Lösung besteht darin, daß durch die Individuelle Festlegung des Auslösezeitpunktes t₂ dieselben Komponenten der Sensorik und Gasgeneratoren des Airbagsystems auch bei völlig unterschiedlichen Fahrzeugen eingesetzt werden können, ohne daß eine Anpassung der Hardware erforderlich ist.

Bei einer bevorzugten Weiterentwicklung des erfindungsgemäßen Verfahrens ist vorgesehen, daß die Umgebungstemperatur des Airbagsystems durch sensorelemente erfaßt wird, und daß die Auswerteelektronik daraus den voraussichtlichen Füllgrad des Luftsackes im vollständig aufgeblasenen Zustand ermittelt und bei der Berechnung des optimalen Zeitpunktes t₃ berücksichtigt.

Vorteilhafterweise werden Steuersignale von den sensorelementen zum Steuern von Zündvorgängen und/oder dem Starten einer gaserzeugenden Reaktion genutzt. Die Gaserzeugung kann auch Intermittierend erfolgen, beispielsweise durch Verwendung eines Mehrstufengasgenerators, und damit weitgehend variabel gestaltet werden. Dadurch können unterschiedliche Füllgrade des Luftsackes erzeugt werden und die Auffangwirkung kann somit mit Hilfe der Sensorelemente auf die kinetische Energie des vor dem Airbag sitzenden Fahrzeuginsassen abgestimmt werden.

Weiterhin kann der Zeitverlauf der Gaserzeugung in einem weiten Bereich durch entsprechende Steuersignale variiert werden. Dies trägt ebenfalls dazu bei, die Auffangwirkung optimal auf die kinetische Energie des Fahrzeuginsassen einzustellen.

Die Steuereinheit regelt die Gasmenge, die Aufblasgeschwindigkeit und den Aufblasdruck und stimmt diese Größen, die das Aufblasverhalten des Luftsackes bestimmen, gezielt auf den durch die erfaßten Parameter charakterisierten Fahrzeuginsassen ab.

Besonders bevorzugt ist auch eine verfahrensvariante, bei der die Berechnung des optimalen Zeitpunkts t₂, ggf. auch des optimalen Zeitpunkts t₃ in der Auswerteelektronik aufgrund von vorher eingegebenen, fahrzeugspezifischen DatenKennfeldern erfolgt, in denen zu einer jeweils auftretenden Konstellation von über die Sensoren erfaßten Parametern die für den jeweiligen Fahrzeugtyp passenden Zeitpunkte t₂ und ggf. auch t₃ zur Erzielung einer optimalen Schutzwirkung für den Fahrzeuginsassen abgespeichert sind. Auf diese Weise läßt sich der Rechenaufwand zur Berechnung der optimalen Zeitpunkte t₂ und/oder t₃ und damit die Reaktionszeit des Systems minimieren. Außerdem kann durch die Eingabe von fahrzeugspezifischen Daten-Kennfeldern eine besonders einfache softwaremäßige Anpassung eines Standard-Airbagsystems an jeden beliebigen Fahrzeugtyp erfolgen.

Vorteilhaft ist auch eine verfahrensvariante, bei der mittels einer Näherungssensorik und/oder durch Auswertung der Fahrgeschwindigkeit des Fahrzeugs permanent eine wahrscheinliche relative Auftreffgeschwindigkeit des Fahrzeugs auf ein äußeres Objekt berechnet und aufgrund dieser relativen Auftreffgeschwindigkeit der in der Auswerteelektronik zu verwendende Auswertealogrithmus voreingestellt wird. Damit kann die Rechenzeit der Auswerteelektronik und damit die Reaktionszeit des Systems im Hinblick auf eine optimal weiche Auffangwirkung noch weiter verringert werden.

Da die aufzufangende kinetische Energie des Fahrzeuginsassen entscheidend von dem Gewicht des Fahrzeuginsassen abhängt, Ist es besonders bevorzugt, daß bei dem erfindungsgemäßen verfahren das Gewicht des vor und/oder neben dem entsprechenden Airbag sitzenden Fahrzeuginsassen durch sensorelemente erfaßt wird.

Wenn die Stellung des sitzes des vor und/oder neben dem entsprechenden Airbag sitzenden Fahrzeuginsassen durch die sensorelemente erfaßt wird, kann die Größe des Luftsackes auf die Distanz zu den vor dem Airbag sitzenden Fahrzeuginsassen gezielt eingestellt werden.

Bei einer weiteren Ausführungsform wird die Kopfhöhe des vor und/oder neben dem entsprechenden Airbag sitzenden Fahrzeuginsassen durch die sensorelemente erfaßt. Die Erfassung der Kopfhöhe könnte beispielsweise durch Sensoren, die in der Nackenstütze als Druckfühler ausgebildet sind, durchgeführt werden. Es wäre aber ebenso denkbar, präzisere Meßtechniken, wie beispielsweise Laser- oder Lichtschranken, einzusetzen.

Bei einer ebenfalls bevorzugten Ausführungsform wird die voraussichtliche Auftreffposition und Auftreffgeschwindigkeit des Kopfes des vor dem entsprechenden Airbag sitzenden Fahrzeuginsassen nach Erfassung der Parameter, die die individuelle kinetische Energie des Fahrzeuginsassen bestimmen, berechnet. Durch die Sensorelemente wird der Fahrzeuginsasse, der vor dem Airbag sitzt, hinsichtlich seiner Körperhaltung überwacht und vermessen, so daß erreicht werden kann, daß der Kopf bei einem Unfall des Fahrzeugs stets die für einen Schutz optimale Auftreffstelle des Luftsackes trifft.

Das erfindungsgemäße Airbagsystem ist mit Sensorelementen versehen, durch die sich der vor dem Airbag sitzende Fahrzeuginsasse hinsichtlich seiner kinetischen Energie sehr gut charakterisieren läßt, so daß ein optimaler Schutz des Fahrzeuginsassen dadurch gewährleistet ist, daß die Leistung des Airbagsystems auf den vor dem Airbag sitzenden Fahrzeuginsassen abgestimmt ist.

Die sensorelemente dienen der vorteilhaften Erfassung der obengenannten Parameter. Die Steuereinheit Ist dabei derart ausgebildet, daß die voraussichtliche Auftreffposition und Auftreffgeschwindigkeit des Kopfes des vor dem entsprechenden Airbag sitzenden Fahrzeuginsassen nach Erfassung der Parameter, die die individuelle kinetische Energie des Fahrzeuginsassen bestimmen, berechnet werden kann. Ein vor dem Airbag sitzender Fahrzeuginsasse wird individuell vor den Folgen eines Verkehrsunfalls, d. h. dem Aufprall auf das Fahrzeuginnere, geschützt.

Weitere vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Figur 1: ein allgemeines Zeitschema für den Aufblasvorgang eines Airbagsystems; und
- Figur 2: ein schematisches Weg-Zeit-Diagramm von unterschiedlichen Fahrzeuginsassen relativ zum Airbag bei einem Fahrzeugcrash.

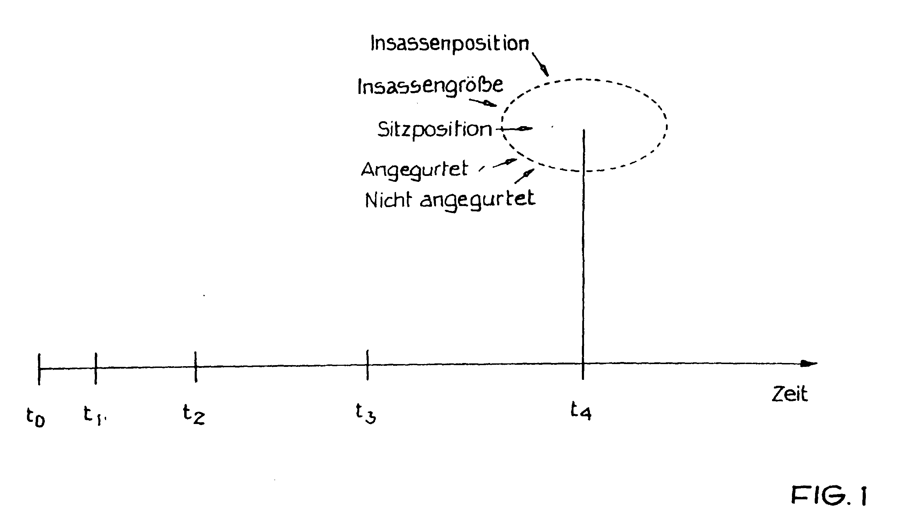

Die zeitliche Abfolge der Auslösung von Airbaggasgeneratoren kann mit den Bezeichnungen
- t₀ =: Beginn des Fahrzeugcrash
- t₁ =: Zeitpunkt, wenn die Auslösesensorik den Crashimpuls erstmals erkennt
- t₂ =: Zeitpunkt, wenn die Auslösesensorik die Airbaggasgeneratoren auslöst
- t₃ =: Zeitpunkt, wenn der Gasgenerator den Airbag aufgeblasen hat (Schutzwirkung des Airbags)
- t₄ =: Zeitpunkt, wenn der Insasse den Airbag berührt
und den Definitionen
t₀ - t₁ = Δt_{Fahrzeug}
t₂ - t₁ = Δt_{Sensorik}
t₃ - t₂ = Δt_{Gasgenerator}
t₄ - t₀ = Δt_{Insasse}
t₄ - t₃ = Δt_{Verzögerung}
grafisch dargestellt werden, wie in der Figur 1 gezeigt ist.

Der Zeitraum Δt_{Fahrzeug} wird durch die Steifigkeit und der Konstruktion der Fahrzeugstruktur beeinflußt und ist im wesentlichen sehr kurz (ca. 2 ms). Der Zeitraum Δt_{Senorik} wird im wesentlichen von der Crashart und der Aufprallgeschwindigkeit determiniert und variiert im Bereich von ca. 5 - 70 ms. Der Zeitraum Δt_{Gasgenerator} und der Füllgrad des Airbags sind im wesentlichen von der Umgebungstemperatur abhängig. Sie variieren je nach Auslegung fahrerseitig von ca. 25 - 40 ms und beifahrerseitig von ca. 40 - 60 ms.

Der Zeitraum Δt_{Insasse} ist hingegen von vielen Parametern wie Aufprallgeschwindigkeit, Aufprallrichtung, Absorptionsvermögen der Fahrzeugstruktur, Insassengröße, insassenposition, Angegurtet/Nicht Angegurtet, jedoch beispielsweise nicht von der Umgebungstemperatur abhängig.

Airbagsysteme nach dem Stand der Technik werden nun so ausgelegt, daß im wesentlichen die Zeiträume Δt_{Sensorik} und Δt_{Gasgenerator} so festgelegt werden, daß in möglichst vielen Anwendungsfällen eine ausreichende, aber nicht immer optimale Schutzwirkung gegeben ist. Das heißt, daß bei gleichen Parameterkonstellationen für das Airbagsystem (Crashart, Fahrzeuggeschwindigkeit, Umgebungstemperatur) das Airbagsystem unabhängig von den insassenrelevanten Parameters (Insassengröße, -gewicht, Sitzposition, Angegurtet/ Nicht Angegurtet) immer gleich funktioniert. Umgekehrt müßte bei gleichen werten für die insassenrelevanten Parametern das Airbagsystem immer gleich funktionieren, was aber bei unterschiedlichen umgebungstemperaturen nicht der Fall ist.

Demnach ist bei den bekannten Airbagsystemen nachteilig, daß für verschiedene Crasharten zwar die Zeitpunkte t₃ im wesentlichen bestimmt sind, jedoch nicht die durch t₄ gegebene individuelle Situation des zu schützenden Insassen berücksichtigt wird. Zudem müssen i.a. die Komponenten sensorik und Gasgeneratoren bezüglicher ihrer jeweiligen Zeiträume auf die verschiedenen Fahrzeuge angepaßt werden.

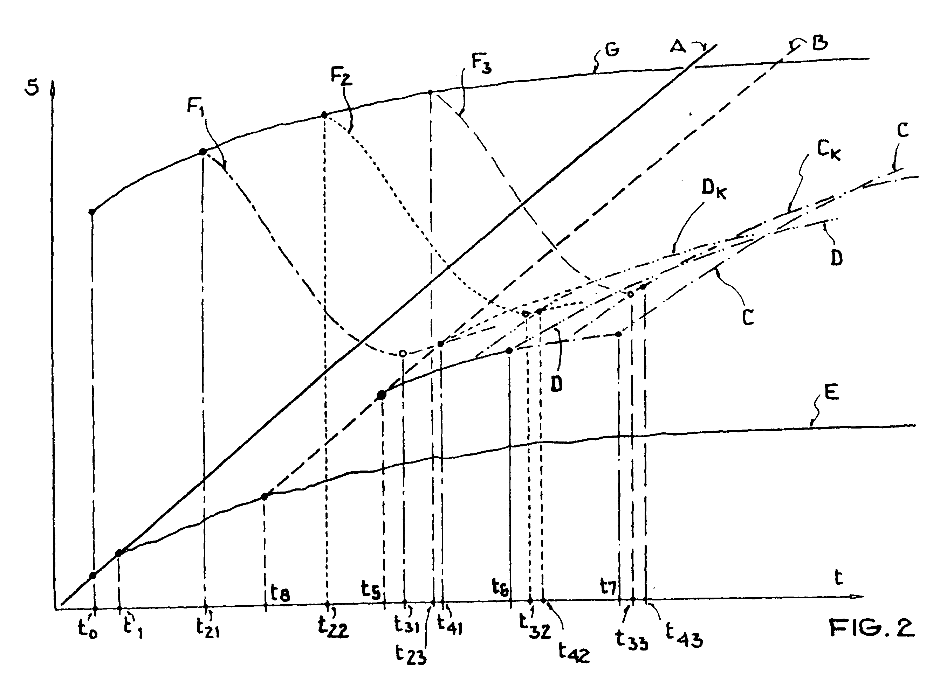

In Figur 2 ist in einem schematischen Weg-Zeit-Diagramm der Bewegungsablauf von Fahrzeuginsassen relativ zum Airbag etwas genauer dargestellt. Die Kurve (A) zeigt eine gleichförmige Fahrzeugbewegung ohne Kollision an, während die parallel zueinander gezeichneten Kurven (E) und (G) die Bewegung des kollidierenden Fahrzeuges bzw. des den Airbag aufnehmenden Lenkrades beschreiben. Wenn zu einem Zeitpunkt t₀ ein Fahrzeugcrash beginnt, so würde ein nicht-angeschnallter Fahrzeuginsasse aufgrund seiner Massenträgheit zum Zeitpunkt t₈ die Kurve (E), d. h. den Fahrzeugsitz fliegend verlassen und auf einer Kurve (B) weiterfliegen. Die Kurve (C) stellt die Bewegung eines in einem Gurtsystem ohne Strammer angeschnallten schwergewichtigen Fahrzeuginsassen, die Kurve (D) die eines entsprechend leichteren Fahrzeuginsassen dar. Die Kurven (F₁), (F₂) und (F₃) schließlich kennzeichnen die relative Bewegung des Airbags in Richtung auf den Insassen in ihrem zeitlichen verlauf bei unterschiedlichen Auslösezeitpunkten t₂₁, t₂₂ und t₂₃ des Gasgenerators.

Zum Zeitpunkt t₅ trennen sich von der Kurve (B) eines nicht-angeschnallten Fahrzeuginsassen die Kurven (C) und (D) der angeschnallten Personen, da diese zu diesem Zeitpunkt t₅ in den Gurt fallen. Anschließend beginnt die Streckphase des Gurtes, bis sich zu einem späteren Zeitpunkt t₆, bei dem die Streckphase für die leichte Person beendet ist, die gemeinsame Kurve in die Kurven (C) für eine schwerere und (D) für eine leichtere Person aufspalten, da die schwere Person eine längere Streckung des Gurtes aufgrund ihrer größeren kinetischen Energie bewirkt und daher deren Streckphase erst zum Zeitpunkt t₇ beendet ist. Da kurz vor dem Erreichen des Zeitpunktes t₆ bzw. t₇ der Kopf der leichten bzw. schweren Person nach vorne geschleudert wird, spaltet sich eine weitere Kurve (Dₖ) bzw. (Cₖ) ab, die den Bewegungsablauf des jeweiligen Kopfes beschreibt.

Im folgenden soll der Bewegungsablauf einer schweren Person gemäß der Kurve (C) im Zusammenhang mit der Airbagentfaltung eines zum Zeitpunkt t₂₃ ausgelösten Gasgenerators gemäß Kurve (F₃) dargestellt werden, wobei davon ausgegangen wird, daß zum Zeitpunkt t₃₃ der Gasgenerator den Airbag vollständig aufgeblasen hat, dieser also seine optimale Schutzwirkung entfalten kann. Zum Zeitpunkt t₄₃ trifft der Kopf der schweren Person, der sich auf der Kurve (C_{K}) bewegt, auf den vollständig aufgeblasenen Airbag, der nunmehr diese Person ohne Verursachung von Verletzungen weich abfängt.

Für einen leichten oder einen nicht-angeschnallten Fahrzeuginsassen stellt sich die Lage jedoch anders dar, wenn der Airbag ebenfalls gemäß der Kurve (F₃) zum Zeitpunkt t₂₃ ausgelöst wird.

Die Kurven (B) und (F₃) kreuzen sich zu einem Zeitpunkt, bei dem der Airbag für den nicht-angeschnallten Fahrgast noch lange nicht sein volles Dämpfungsvolumen erreicht hat, aber der nicht-angeschnallte Fahrzeuginsasse bereits zu diesem Zeitpunkt den Airbag berührt. Offensichtlich ist die Dämpfungswirkung in diesem Falle alles andere als optimal.

Zu einem späteren Zeitpunkt trifft die leichte Person, die sich auf der Kurve (D) bewegt, mit ihrem Kopf gemäß Kurve (Dₖ) auf den Airbag, wobei sich der Gurt dieser leichten Person schon zum Zeitpunkt t₆ vollständig gestrafft hat. Auch hier ist wieder offensichtlich nicht der optimale Zeitpunkt für die Entfaltung der vollen Dämpfungswirkung des Airbags getroffen, da erst zu einem späteren Zeitpunkt t₃₃ der Aufblasvorgang des Airbags vollständig abgeschlossen und der Luftsack entsprechend prall gefüllt ist.

Aus alledem ergibt sich, daß beim klassischen Verlauf einer nach einem starren Zeitschema ablaufenden Airbagentfaltung nur in seltenen Ausnahmefällen optimale Bedingungen für die Dämpfung des auftreffenden Fahrzeuginsassen herrschen. in der Regel wird der Airbag für die individuelle Situation entweder zu früh oder zu spät, zu hart oder zu weich aufgeblasen sein.

Die erfindungsgemäße Lösung koppelt nun die airbagrelevanten Parameter mit den insassenrelevanten Parametern, indem in dieses System ein verzögerungszeitraum Δt_{Verzögerung}eingeführt wird, der aktiv gesteuert wird. Diese aktive Steuerung wird erreicht, indem Sensoren die relevanten Insassenparameter wie insassengröße, -gewicht, Sitzposition, Angegurtet/Nicht Angegurtet, Fahrgeschwindigkeit und Airbagparameter wie Umgebungstemperatur ermitteln und einer Auswerteelektronik zur Verfügung stellen, die mit einer Steuereinheit zur Aktivierung des Airbags gekoppelt ist.

Somit gibt die Steuereinheit in Abhängigkeit der ermittelten Parameter ein Zündsignal zur Auslösung des Gasgenerators ab. Dies führt im Fall einer leichten Person gemäß Kurve (D) gegenüber einer schweren Person gemäß Kurve (C) zu einem früheren Auslösezeitpunkt t₂₂ des Gasgenerators, der sich dann gemäß Kurve (F₂)-entfaltet. Der Airbag hat zum Zeitpunkt t₃₂ den Aufblasvorgang abgeschlossen und entfaltet zum Zeitpunkt t₄₂, wo der Kopf des Fahrzeuginsassen gemäß Kurve (D_{K}) auf den Airbag auftrifft, seine volle Schutzwirkung.

Im Falle eines nicht-angeschnallten Fahrzeuginsassen (vgl. Kurve (B)) veranlaßt die Steuereinheit eine weitere Vorverlegung des Zündzeitpunktes des Gasgenerators auf den Zeitpunkt t₂₁, weshalb schon zu einem frühen Zeitpunkt, nämlich zum Zeitpunkt t₃₁ der Airbag vollständig aufgeblasen ist und daher im Auftreffpunkt des Fahrzeuginsassen mit dem Airbag zum Zeitpunkt t₄₁ gleichfalls die volle Schutzwirkung gegeben ist.

Im Rahmen der Airbaganpassung in der Entwicklungsphase können nun Kennfelder für die einzelnen Parameter und deren Kombinationen erstellt werden, aus denen zur Erzielung einer optimalen Schutzwirkung der verzögerungszeitraum Δt_{Verzögerung} hervorgeht. Im Falle der Airbagauslösung kommt nun nach der Analyse des Verzögerungssignales und der Entscheidung, daß die Airbags ausgelöst werden, dieser Verzögerungszeitraum vor der Airbagauslösung zum Tragen. Die technische Realisierung dieses verzögerungszeitraumes kann dabei sowohl hard- als auch softwaremäßig erfolgen.

Durch diese Kennfelder ist es nun im weitesten Sinne erstmalig möglich, sowohl die Sensorik als auch die Gasgeneratoren unverändert in verschiedenen Fahrzeugtypen einzusetzen, weil fahrzeugspezifische Daten durch die Kennfelder repräsentiert werden können. Hieraus leitet sich ein hoher wirtschaftlicher Vorteil für die Komponenten Sensorik und Gasgenerator ab.

Ebenso ist es möglich, im Crashfall die schutzfunktion des Airbagsystems optimal auf den zu schützenden Insassen abzustimmen.

Vorteilhaft bietet diese Lösung auch die Möglichkeit der Einführung von sogenannten Alertfunktionen in das Airbagauslösesystem. Beispielsweise kann durch Einführung einer Näherungssensorik und/oder der Auswertung der Fahrgeschwindigkeit bereits eine Voreinstellung des Auswertealgorithmus vorgenommen werden, was beispielsweise zu kürzeren Auslösezeiten führen würde. Weitere Kombinationen, wie Nichtauslösung bei geringen Unfallschweren oder im Falle von "Out-of-Position" des insassens, sind denkbar.

Ein weiterer Vorteil ist in der Kombination der erfindungsgemäßen Lösung mit sogenannten Mehrstufengasgeneratoren zu sehen, die sowohl die Aufblaszeit als auch den Füllgrad von Airbags in gewissen Grenzen variieren können. Beispielsweise könnte durch einen variablen Zeitversatz der beiden Stufen eines zweistufigen Gasgenerators der insassenschutz noch mehr auf die individuelle Insassensituation angepaßt werden.

## Patentansprüche

1. Verfahren zum Abbau der kinetischen Energie eines Fahrzeuginsassen bei einem Fahrzeugunfall mit starker, negativer Beschleunigung mittels Aufblasen eines Luftsackes in einem Airbagsystem, wobei
eine Steuereinheit das Airbagsystem aufgrund von elektrischen Signalen eines im Fahrzeug vorgesehenen Beschleunigungssensors aktiviert, wobei
das Gewicht und die Sitzposition des vor dem Airbag sitzenden Fahrzeuginsassen durch Sensorelemene erfaßt wird, sowie durch die Sensorelemente erfaßt wird, ob der Sicherheitsgurt von dem vor dem Airbag sitzenden Fahrzeuginsassen angelegt ist, und wobei zumindest ein weiterer Parameter erfaßt wird, der die individuelle kinetische Energie des Fahrzeuginsassen bestimmt, wobei
von den Sensorelementen elektrische Signale, die diese Parameter repräsentieren, an eine mit der Steuereinheit verbundene Auswerteelektronik übergeben werden, in welcher aufgrund dieser Signale ein Zeitpunkt t₄ (t₄₁, t₄₂, t₄₃) errechnet wird, zu welchem der Fahrzeuginsasse voraussichtlich den aufgeblasenen Luftsack des Airbagsystems berühren wird, wobei
die Auswerteelektronik aufgrund des errechneten Zeitpunktes t₄ (t₄₁, t₄₂, t₄₃) einen davor liegenden Zeitpunkt t₂ (t₂₁, t₂₂, t₂₃), zu welchem das Aufblasen des Luftsackes beginnen soll, errechnet und an die Steuereinheit weitergibt, welche zum Zeitpunkt t₂ (t₂₁, t₂₂, t₂₃) das Aufblasen des Gassacks auslöst, wobei
in der Auswerteelektronik aufgrund der Signale von den Sensoren auch ein zwischen den Zeitpunkten t₂ (t₂₁, t₂₂, t₂₃) und t₄ (t₄₁, t₄₂, t₄₃) liegender Zeitpunkt t₃ (t₃₁, t₃₂, t₃₃), zu welchem das Aufblasen des Luftsackes beendet sein soll, errechnet und an die Steuereinheit weitergegeben wird,
und wobei die Steuereinheit den Aufblasvorgang des Luftsackes derart steuert, daß der Luftsack zum Zeitpunkt t₃ (t₃₁, t₃₂, t₃₃) vollständig aufgeblasen ist.

2. Verfahren nach Anspruch 1, **dadurch gekennzeichnet, daß** die Umgebungstemperatur des Airbagsystems durch Sensorelemente erfaßt wird, und daß die Auswerteelektronik daraus den voraussichtlichen Füllgrad des Luftsackes im vollständig aufgeblasenen Zustand ermittelt und bei der Berechnung des optimalen Zeitpunktes t₃ (t₃₁, t₃₂, t₃₃) berücksichtigt.

3. Verfahren nach einem der vorhergehenden Ansprüche, **dadurch gekennzeichnet, daß** die Stellung des Sitzes des vor und/oder neben dem entsprechenden Airbag sitzenden Fahrzeuginsassen durch die Sensorelemente erfaßt wird.

4. Vefahren nach einem der vorhergehenden Ansprüche, **dadurch gekennzeichnet, daß** die Kopfhöhe des vor und/oder neben dem entsprechenden Airbag sitzenden Fahrzeuginsassen durch die Sensorelemente erfaßt wird.

5. Verfahren nach einem der vorhergehenden Ansprüche, **dadurch gekennzeichnet, daß** in der Auswerteelektronik die voraussichtliche Auftreffposition und Auftreffgeschwindigkeit des Kopfes des vor dem entsprechenden Airbag sitzenden Fahrzeuginsassen nach Erfassung der Parameter, die die individuelle kinetische Energie des Fahrzeuginsassen bestimmen, berechnet wird.

6. Verfahren nach einem der vorhergehenden Ansprüche, **dadurch gekennzeichnet, daß** die Berechnung des optimalen Zeitpunkts t₂ (t₂₁, t₂₂, t₂₃), ggf. auch des optimalen Zeitpunkts t₃ (t₃₁, t₃₂, t₃₃) in der Auswerteelektronik aufgrund von vorher eingegebenen, fahrzeugspezifischen Daten-Kennfeldern erfolgt, in denen zu einer jeweils auftretenden Konstellation von über die Sensoren erfaßten Parametern die für den jeweiligen Fahrzeugtyp passenden Zeitpunkte t₂ (t₂₁, t₂₂, t₂₃) und ggf. auch t₃ (t₃₁, t₃₂, t₃₃) zur Erzielung einer optimalen Schutzwirkung für den Fahrzeuginsassen abgespeichert sind.

7. Verfahren nach einem der vorhergehenden Ansprüche, **dadurch gekennzeichnet, daß** mittels einer Näherungssensorik und/oder durch Auswertung der Fahrgeschwindigkeit des Fahrzeugs permanent eine wahrscheinliche relative Auftreffgeschwindigkeit des Fahrzeugs auf ein äußeres Objekt berechnet und aufgrund dieser relativen Auftreffgeschwindigkeit der in der Auswerteelektronik zu verwendende Auswertealgorithmus voreingestellt wird.

8. Verfahren nach einem der vorhergehenden Ansprüche, **dadurch gekennzeichnet, daß** in der Auswerteelektronik aufgrund der von den Sensoren gelieferten Signale ein optimaler Füllgrad des Luftsackes errechnet und an die Steuereinheit weitergeleitet wird, und daß die Steuereinheit durch entsprechende Ansteuerung eines Mehrstufengasgenerators die optimale Füllung des Luftsackes bewirkt.

9. Airbagsystem zum Abbau der kinetischen Energie eines Fahrzeuginsassen bei einem Fahrzeugunfall mit starker, negativer Beschleunigung, wobei
das Airbagsystem eine Steuereinheit zum Aufblasen eines Luftsackes aufweist, die das Airbagsystem aufgrund von elektrischen Signalen eines im Fahrzeug vorgesehenen Beschleunigungssensors aktiviert, wobei
Sensorelemente zur Erfassung des Gewichts und der Sitzposition des vor dem Airbag sitzenden Fahrzeuginsassen vorgesehen sind, wobei
die Sensorelemente ferner vorgesehen sind, um zu erfassen, ob der Sicherheitsgurt von dem vor dem Airbag sitzenden Fahrzeuginsassen angelegt ist, sowie zur Erfassung wenigstens eines weiteren Parameters, der die individuelle kinetische Energie des Fahrzeuginsassen bestimmt, wobei
die Sensorelemente elektrische Signale, die diese Parameter repräsentieren, an eine mit der Steuereinheit verbundene Auswertelektronik übergeben, in welcher aufgrund dieser Signale ein Zeitpunkt t₄ (t₄₁, t₄₂, t₄₃) errechnet werden kann, zu welchem der Fahrzeuginsasse voraussichtlich den aufgeblasenen Luftsack des Airbagsystems berühren wird, wobei
die Auswerteelektronik aufgrund des errechneten Zeitpunkts t₄ (t₄₁, t₄₂, t₄₃) einen davor liegenden Zeitpunkt t₂ (t₂₁, t₂₂, t₂₃), zu welchem das Aufblasen des Luftsackes beginnen soll, errechnen und an die Steuereinheit zur Auslösung des Aufblasvorgangs weitergeben kann, wobei
die Auswerteelektronik aufgrund der Signale von den Sensoren auch einen zwischen den Zeitpunkten t₂ (t₂₁, t₂₂, t₂₃) und t₄ (t₄₁, t₄₂, t₄₃) liegenden Zeitpunkt t₃ (t₃₁, t₃₂, t₃₃), zu welchem das Aufblasen des Luftsackes beendet sein soll, errechnen und an die Steuereinheit weitergeben kann, und wobei
der Aufblasvorgang des Luftsackes von der Steuereinheit derart gesteuert werden kann, daß der Luftsack zum Zeitpunkt t₃ (t₃₁, t₃₂, t₃₃) vollständig aufgeblasen ist.

10. Airbagsystem nach Anspruch 9, **dadurch gekennzeichnet, daß** Sensorelemente zur Erfassung der Umgebungstemperatur des Airbags vorgesehen sind.

11. Airbagsystem nach einem der Ansprüche 9 oder 10, **dadurch gekennzeichnet, daß** Sensorelemente zur Erfassung der Stellung des Sitzes des vor und/oder neben dem entsprechenden Airbag sitzenden Fahrzeuginsassen vorgesehen sind.

12. Airbagsystem nach einem der Ansprüche 9 bis 11, **dadurch gekennzeichnet, daß** Sensorelemente zur Erfassung der Kopfhöhe des vor und/oder neben dem entsprechenden Airbag sitzenden Fahrezeuginsassen vorgesehen sind.

13. Airbagsystem nach einem der Ansprüche 9 bis 12, **dadurch gekennzeichnet, daß** die Steuereinheit derart ausgebildet ist, daß die voraussichtliche Auftreffposition und Auftreffgeschwindigkeit des Kopfes des vor und/oder neben dem entsprechenden Airbag sitzenden Fahrzeuginsassen nach Erfassung der Parameter, die die individuelle kinetische Energie des Fahrzeuginsassen bestimmen, durch die Steuereinheit berechenbar sind.

14. Airbagsystem nach einem der Ansprüche 9 bis 13, **dadurch gekennzeichnet, daß** eine Näherungssensorik vorgesehen ist, mit deren Hilfe die Relativgeschwindigkeit eines äußeren Objekts relativ zum Fahrzeug ermittelt werden kann.

15. Airbagsystem nach einem der Ansprüche 9 bis 14, **dadurch gekennzeichnet, daß** ein Merhstufengasgenerator zum Aufblasen des Luftsackes mit unterschiedlichen Geschwindigkeiten und/oder unterschiedlichen Füllgraden vorgesehen ist.

## Claims

1. A method of dissipating the kinetic energy of a vehicle occupant in case of a vehicle accident involving heavy, negative acceleration by means of inflating an air bag in an air bag system,
a control unit activating the air bag system on the basis of electric signals of an acceleration sensor provided in the vehicle,
the weight and the seating position of the vehicle occupant seated in front of the air bag being sensed by sensor elements, and the sensor elements sensing whether the seat belt has been buckled up by the vehicle occupant seated in front of the air bag, and at least one further parameter being sensed which determines the individual kinetic energy of the vehicle occupant,
electric signals representing these parameters being transmitted by the sensor elements to an electronic analyzer which is connected to the control unit and in which on the basis of these signals a point in time t₄ (t₄₁, t₄₂, t₄₃) is calculated at which the vehicle occupant is likely to come into contact with the inflated air bag of the air bag system,
the electronic analyzer calculating on the basis of the established point in time t₄ (t₄₁, t₄₂, t₄₃) a prior point in time t₂ (t₂₁, t₂₂, t₂₃) at which inflation of the air bag is to commence and passing it on to the control unit which at the point in time t₂ (t₂₁, t₂₂, t₂₃) activates inflation of the air bag,
a point in time t₃ (t₃₁, t₃₂, t₃₃) which is between the points in time t₂ (t₂₁, t₂₂, t₂₃) and t₄ (t₄₁, t₄₂, t₄₃) and at which inflation of the air bag is to be completed being also calculated in the electronic analyzer on the basis of the signals from the sensors and being passed on to the control unit,
and the control unit controlling the inflation process of the air bag such that the air bag is fully inflated at the point in time t₃ (t₃₁, t₃₂, t₃₃).

2. The method as set forth in claim 1, **characterized in that** the ambient temperature of the air bag system is sensed by sensor elements and that the electronic analyzer establishes therefrom the likely degree of filling of the air bag in the fully inflated condition and takes it into account in calculating the optimum point in time t₃ (t₃₁, t₃₂, t₃₃).

3. The method as set forth in either of the preceding claims, **characterized in that** the position of the seat of the vehicle occupant seated in front of and/or beside the corresponding air bag is sensed by the sensor elements.

4. The method as set forth in any of the preceding claims, **characterized in that** the head level of the vehicle occupant seated in front of and/or beside the corresponding air bag is sensed by the sensor elements.

5. The method as set forth in any of the preceding claims, **characterized in that** the likely impact position and impact velocity of the head of the vehicle occupant seated in front of the corresponding air bag are calculated in the electronic analyzer after sensing of the parameters determining the individual kinetic energy of the vehicle occupant.

6. The method as set forth in any of the preceding claims, **characterized in that** calculating the optimum point in time t₂ (t₂₁, t₂₂, t₂₃) and, if required, also the optimum point in time t₃ (t₃₁, t₃₂, t₃₃) in the electronic analyzer is done on the basis of previously entered characteristic data diagrams specific to the vehicle concerned, in which, for each individually occurring constellation of parameters sensed by the sensors, the points in time t₂ (t₂₁, t₂₂, t₂₃) and, if required, also t₃ (t₃₁, t₃₂, t₃₃) suitable for the respective type of vehicle concerned are stored, for achieving an optimum protective effect for the vehicle occupant.

7. The method as set forth in any of the preceding claims, **characterized in that** by means of a proximity sensor system and/or by analyzing the travelling speed of the vehicle a probable impact velocity of the vehicle relative to an outer object is permanently calculated, and the analysis algorithm to be used in the electronic analyzer is preset on the basis of this relative impact velocity.

8. The method as set forth in any of the preceding claims, **characterized in that** on the basis of the signals supplied by the sensors an optimum degree of filling of the air bag is calculated in the electronic analyzer and relayed to the control unit, and that the control unit effects optimum filling of the air bag by correspondingly signalling a multi-stage inflator.

9. An air bag system for dissipating the kinetic energy of a vehicle occupant in case of a vehicle accident involving heavy, negative acceleration,
the air bag system comprising a control unit for inflating an air bag, which activates the air bag system on the basis of electric signals of an acceleration sensor provided in the vehicle,
sensor elements being provided for sensing the weight and the seating position of the vehicle occupant seated in front of the air bag,
the sensor elements being further provided for sensing whether the seat belt has been buckled up by the vehicle occupant seated in front of the air bag and also for sensing at least one further parameter which determines the individual kinetic energy of the vehicle occupant,
the sensor elements transmitting electric signals representing these parameters to an electronic analyzer which is connected to the control unit and in which on the basis of these signals a point in time t₄ (t₄₁, t₄₂, t₄₃) can be calculated at which the vehicle occupant is likely to come into contact with the inflated air bag of the air bag system,
the electronic analyzer being adapted to calculate on the basis of the established point in time t₄ (t₄₁, t₄₂, t₄₃) a prior point in time t₂ (t₂₁, t₂₂, t₂₃) at which the inflation of the air bag is to commence, and being adapted to pass it on to the control unit for triggering the inflation process,
the electronic analyzer being adapted to calculate on the basis of the signals from the sensors also a point in time t₃ (t₃₁, t₃₂, t₃₃) which is between the points in time t₂ (t₂₁, t₂₂, t₂₃) and t₄ (t₄₁, t₄₂, t₄₃) and at which inflation of the air bag is to be completed, and the electronic analyzer being adapted to pass it on to the control unit, and
the inflation process of the air bag being controllable by the control unit such that the air bag is fully inflated at the point in time t₃ (t₃₁, t₃₂, t₃₃).

10. The air bag system as set forth in claim 9, **characterized in that** sensor elements are provided for sensing the ambient temperature of the air bag.

11. The air bag system as set forth in either of claims 9 or 10, **characterized in that** sensor elements are provided for sensing the position of the seat of the vehicle occupant seated in front of and/or beside the corresponding air bag.

12. The air bag system as set forth in any of claims 9 to 11, **characterized in that** sensor elements are provided for sensing the head level of the vehicle occupant seated in front of and/or beside the corresponding air bag.

13. The air bag system as set forth in any of claims 9 to 12, **characterized in that** the control unit is configured such that the likely impact position and impact velocity of the head of the vehicle occupant seated in front of and/or beside the corresponding air bag can be calculated by the control unit after sensing of the parameters determining the individual kinetic energy of the vehicle occupant.

14. The air bag system as set forth in any of claims 9 to 13, **characterized in that** a proximity sensor system is provided with the aid of which the velocity of an outer object relative to the vehicle can be established.

15. The air bag system as set forth in any of claims 9 to 14, **characterized in that** a multi-stage inflator is provided for inflating the air bag at differing rates and/or differing degrees of filling.

## Revendications

1. Procédé de dissipation de l'énergie cinétique d'un occupant de véhicule en cas d'accident avec forte accélération négative au moyen du gonflage d'un coussin à gaz dans un système d'airbag, dans lequel
une unité de contrôle active le système d'airbag sur la base de signaux électriques d'un capteur d'accélération prévu dans le véhicule,
le poids et la position assise de l'occupant du véhicule assis devant l'airbag sont détectés par des éléments capteurs, et les éléments capteurs détectent si la ceinture de sécurité de l'occupant assis devant l'airbag est attachée, et au moins un autre paramètre déterminant l'énergie cinétique individuelle de l'occupant du véhicule est détecté,
des signaux électriques qui représentent ces paramètres sont transmis par les éléments capteurs à un système d'évaluation électronique dans lequel, sur la base de ces signaux, est calculé un moment t₄ (t₄₁, t₄₂, t₄₃) auquel l'occupant du véhicule va vraisemblablement toucher le coussin à gaz du système d'airbag,
le système d'évaluation électronique calcule, sur base du moment t₄ (t₄₁, t₄₂, t₄₃), un moment t₂ (t₂₁, t₂₂, t₂₃) précédant celui-ci et auquel le gonflage du coussin à gaz doit commencer, et le transmet à l'unité de commande qui déclenche au moment t₂ (t₂₁, t₂₂, t₂₃) le gonflage du coussin à gaz,
dans le système d'évaluation électronique, un moment t₃ (t₃₁, t₃₂, t₃₃) situé entre les moments t₂ (t₂₁, t₂₂, t₂₃) et t₄ (t₄₁, t₄₂, t₄₃) et auquel le gonflage du coussin à gaz doit être achevé, est aussi calculé sur la base des signaux des capteurs et transmis à l'unité de commande,
et l'unité de commande commande l'opération de gonflage du coussin à gaz de telle sorte que le coussin à gaz soit totalement gonflé au moment t₃ (t₃₁, t₃₂, t₃₃).

2. Procédé selon la revendication 1, **caractérisé en ce que** la température ambiante du système d'airbag est détectée par des éléments capteurs, et **en ce que** le système d'évaluation électronique détermine à partir de cela le niveau de remplissage prévu du coussin à gaz à l'état totalement gonflé et tient compte, lors du calcul, du moment t₃ (t₃₁, t₃₂, t₃₃) optimum.

3. Procédé selon l'une des revendications précédentes, **caractérisé en ce que** la position du siège de l'occupant du véhicule assis devant et/ou à côté de l'airbag correspondant est détectée par les éléments capteurs.

4. Procédé selon l'une des revendications précédentes, **caractérisé en ce que** la hauteur de tête de l'occupant du véhicule assis devant et/ou à côté de l'airbag correspondant est détecté par les éléments capteurs.

5. Procédé selon l'une des revendications précédentes, **caractérisé en ce que** dans le système d'évaluation électronique, la position d'impact et la vitesse d'impact prévues de la tête de l'occupant du véhicule assis devant l'airbag correspondant sont calculées après avoir détecté les paramètres qui déterminent l'énergie cinétique individuelle de l'occupant du véhicule.

6. Procédé selon l'une des revendications précédentes, **caractérisé en ce que** le calcul du moment optimum t₂ (t₂₁, t₂₂, t₂₃), et éventuellement aussi du moment optimum t₃ (t₃₁, t₃₂, t₃₃), a lieu dans le système d'évaluation électronique sur la base de diagrammes caractéristiques de données spécifiques du véhicule et entrées auparavant, dans lesquels, pour une constellation respectivement en occurrence de paramètres détectés par les capteurs, les moments t₂ (t₂₁, t₂₂, t₂₃) et éventuellement aussi t₃ (t₃₁, t₃₂, t₃₃) adaptés au type de véhicule respectif, sont mémorisés pour obtenir un effet de protection optimum pour l'occupant du véhicule.

7. Procédé selon l'une des revendications précédentes, **caractérisé en ce qu'**au moyen d'un système de captage d'approche et/ou par l'évaluation de la vitesse de roulement du véhicule, on calcule une vitesse d'impact relative probable du véhicule sur un objet extérieur et, sur la base de cette vitesse d'impact relative, on ajuste de façon anticipée l'algorithme d'évaluation à utiliser dans le système électronique d'évaluation.

8. Procédé selon l'une des revendications précédentes, **caractérisé en ce que** dans le système d'évaluation électronique, un niveau de remplissage optimum du coussin à gaz est calculé, sur la base des signaux fournis par les capteurs, et transmis à l'unité de commande, et **en ce que** l'unité de commande effectue le remplissage optimum du coussin à gaz par pilotage correspondant d'un générateur de gaz à plusieurs étages.

9. Système d'airbag pour la dissipation d'énergie cinétique d'un occupant de véhicule en cas d'accident de véhicule avec forte accélération négative, dans lequel
le système d'airbag présente une unité de commande pour gonfler un coussin à gaz, laquelle active le système d'airbag sur la base de signaux électriques d'un capteur d'accélération prévu dans le véhicule,
des éléments capteurs sont prévus pour détecter le poids et la position assise de l'occupant du véhicule assis devant l'airbag,
les éléments capteurs sont en outre prévus pour détecter si la ceinture de sécurité de l'occupant assis devant l'airbag est attachée,
et pour détecter au moins un autre paramètre qui détermine l'énergie cinétique individuelle de l'occupant du véhicule,
les éléments capteurs transmettent des signaux électriques, qui représentent ces paramètres, à un système d'évaluation électronique relié à l'unité de commande et dans lequel, sur la base de ces signaux, peut être calculé un moment t₄ (t₄₁, t₄₂, t₄₃) auquel l'occupant du véhicule va vraisemblablement toucher le coussin à gaz du système d'airbag,
le système d'évaluation électronique peut, sur la base du moment t₄ (t₄₁, t₄₂, t₄₃), calculer un moment t₂ (t₂₁, t₂₂, t₂₃) précédant celui-ci et auquel le gonflage du coussin à gaz doit commencer, et le transmettrc à l'unité de commande pour déclencher le gonflage du coussin à gaz,
le système d'évaluation électronique peut aussi, sur la base des signaux des capteurs, calculer un moment t₃ (t₃₁, t₃₂, t₃₃) situé entre les moments t₂ (t₂₁, t₂₂, t₂₃) et t₄ (t₄₁, t₄₂, t₄₃) et auquel le gonflage du coussin à gaz doit être achevé, le transmettre à l'unité de commande, et
l'unité de commande peut commander l'opération de gonflage du coussin à gaz de telle sorte que le coussin à gaz soit totalement gonflé au moment t₃ (t₃₁, t₃₂, t₃₃).

10. Système d'airbag selon la revendication 9, **caractérisé en ce que** des éléments capteurs sont prévus pour détecter la température ambiante de l'airbag.

11. Système d'airbag selon l'une des revendications 9 ou 10, **caractérisé en ce que** des éléments capteurs sont prévus pour détecter la position du siège de l'occupant du véhicule assis devant et/ou à côté de l'airbag correspondant.

12. Système d'airbag selon l'une des revendications 9 à 11, **caractérisé en ce que** des éléments capteurs sont prévus pour détecter la hauteur de tête de l'occupant du véhicule assis devant et/ou à côté de l'airbag correspondant.

13. Système d'airbag selon l'une des revendications 9 à 12, **caractérisé en ce que** l'unité de commande est réalisée de telle manière que la position d'impact et la vitesse d'impact prévues de la tête de l'occupant du véhicule assis devant et/ou à côté de l'airbag correspondant peuvent être calculées par l'unité de commande après avoir détecté les paramètres qui déterminent l'énergie cinétique individuelle de l'occupant du véhicule.

14. Système d'airbag selon l'une des revendications 9 à 13, **caractérisé en ce qu'**il est prévu un système de captage d'approche à l'aide duquel la vitesse relative d'un objet extérieur par rapport au véhicule peut être déterminée.

15. Système d'airbag selon l'une des revendications 9 à 14, **caractérisé en ce qu'**il est prévu un générateur de gaz à plusieurs étages pour gonfler le coussin à gaz à différentes vitesses et/ou à différents niveaux de remplissage
